# DEMANDE DE BREVET EUROPEEN

(11) **EP 4 455 627 A1**
(43) Date de publication de la demande: **30.10.2024**
(21) Numéro de dépôt: 24172124.0
(22) Date de dépôt: 24.04.2024
(51) Int. Cl.: G01L 25/00, G01G 23/01

(54) **DISPOSITIF DE GENERATION D'ECHELONS DE COMPRESSION OU DE TRACTION SANS CONTACT**

(30) Priorité: 26.04.2023 FR 2304237
(71) Demandeur: Commissariat à l'Energie Atomique et aux Energies Alternatives, 75015 Paris (FR)
(72) Inventeur: LAVAYSSIERE, Maylis, 46100 Faycelles (FR)
(74) Mandataire: Brevalex

(57) **Abrégé**

L'invention concerne un dispositif pour la caractérisation d'un capteur pouvant réaliser des mesures de force ou de masse en dynamique, par exemple un capteur de force (12), comportant :
-des moyens (8) magnétiques pour générer un champ magnétique selon au moins un axe (XX');
- des moyens (2, 4, 6) pour ajuster puis maintenir une position relative, selon l'axe (XX'), entre un capteur de force (12) à tester et les moyens (8) magnétiques ;
-des moyens (22-24) pour mesurer un signal représentatif d'une force, en traction ou en compression, appliquée à un capteur de force sans contact, directement à l'aide desdits moyens magnétiques.

## Description

### DOMAINE TECHNIQUE ET ART ANTERIEUR

L'invention concerne le domaine de la métrologie pour les capteurs, notamment les capteurs de force, en vue de leur essai et/ou caractérisation et/ou étalonnage en dynamique.

Elle permet par exemple de générer des échelons de compression ou de traction sans contact, par exemple pour un étalonnage in-situ de capteurs de force en régime statique et/ou pour une caractérisation en dynamique.

Elle permet notamment de remonter à la fonction de transfert de la chaîne de mesure. Actuellement, 3 méthodologies existent dans la littérature pour qualifier des capteurs de force en dynamique.

Tout d'abord, il existe la méthode de choc par impact généré par un marteau de choc, qui génère des signaux de type « pulse ». Cette méthode est adaptée à des capteurs de force avec une grande étendue de mesure et sa mise en oeuvre, qui requiert l'utilisation d'interféromètres pour la mesure de l'accélération, rend difficile l'aspect in-situ, même si des efforts sont faits pour travailler sur un système embarqué, comme décrit dans l'article de N. Vlajic and A. Chijioke, "Traceable calibration and démonstration of a portable dynamic force transfer standard," paru dans Metrologia, vol. 54, no. 4, pp. S83-S98, 2017/07/18 2017.

Il existe également la méthode d'excitation sinusoïdale, qui soumet le capteur à des oscillations périodiques, en reliant l'extrémité de ce dernier à un pot vibrant ; à ce sujet, on peut se reporter à l'article de C. Schlegel et al., "Traceable periodic force calibration," Metrologia, vol. 49, no. 3, pp. 224-235, 2012/03/12 2012.

Enfin, il existe également une méthode de génération d'échelon de force qui peut se faire par la méthode dite du « couteau » ou « cut-wire », dans laquelle le capteur est soumis à une force en compression ou en traction à l'aide d'un fil relié à une masse connue permettant d'appliquer une force connue. Lors de la coupure du fil, le système revient à son état d'équilibre après avoir été soumis à un échelon considéré parfait. On obtient la réponse fréquentielle de la chaîne de mesure.

Une méthode générique propose d'englober les 3 types d'étalonnage décrits précédemment. Elle est basée sur le principe d'une masse mise en lévitation (Lévitation Mass Method LMM) au-dessus d'un capteur de force via l'utilisation de la pression d'une colonne d'air ou d'un champ magnétique, comme décrit par Y. Fujii and A. Takita, dans l'article intitulé "Correction method for force transducers on dynamic condition with or without the Levitation Mass Method (LMM)," paru dans Procedia Engineering, vol. 32, pp. 13-17, 2012/01/01/ 2012. Cette méthode utilise la force inertielle générée par la masse qui vient impacter le capteur, obtenue par le produit de la masse par son accélération. En fonction de la configuration expérimentale, les 3 types de sollicitations précédentes peuvent être obtenus.

On trouve dans la littérature (voir par exemple l'article de D. B. Newell et al."The NIST Microforce Realization and Measurement Project," Instrumentation and Measurement, IEEE Transactions on Instrumentation and Measurement, vol. 52, pp. 508-511, 05/01 2003) des sollicitations basées non pas sur une force mécanique, mais sur une force électrostatique : il s'agit de l'application d'échelons de force dans des gammes de l'ordre du nN au µN, et dans un contexte d'étalonnage statique.

D'une manière générale, on ne retrouve pas de procédé qui soit affranchi d'une mise en oeuvre par un contact direct, ce qui génère une perturbation de la mesure. En particulier, dans le cas de la technique par coupure d'un fil par une lame, une certaine quantité de fil reste accrochée au capteur et est mise en mouvement, ce qui fausse la position d'équilibre. De plus cette technique nécessite la mise en oeuvre d'une force perpendiculaire au fil (pour actionner la lame coupante) ce qui génère là encore une force de biais qui est perturbatrice.

3 problèmes liés à cette technique sont discutés par la suite de cette demande. Concernant les autres techniques mentionnées ci-dessus, elles sont complexes à mettre en oeuvre : elles nécessitent la présence d'un opérateur et une modification du système expérimental lorsque l'on veut modifier les forces ou les contraintes mises en oeuvre et ne peuvent notamment pas être réalisées *in situ,* sur un site de mesure et en dehors d'un laboratoire.

De plus, on cherche une technique qui puisse être mise en oeuvre sur une large gamme de travail, par exemple de l'ordre du 1/100^{eme} de Newton à au-delà du Newton (N).

### EXPOSÉ DE L'INVENTION

L'invention vise à résoudre tout ou partie des problèmes exposés ci-dessus ou dans la suite de la présente demande.

L'invention concerne d'abord un dispositif pour tester et/ou pour l'étalonnage /ou la caractérisation de la fonction de transfert d'un capteur (par exemple un capteur de force), comportant :
- des moyens magnétiques pour générer un champ magnétique selon au moins un axe (XX'), par exemple un électroaimant ;
- des moyens pour ajuster puis maintenir et/ou mesurer une position relative, selon l'axe (XX'), entre un capteur à tester et les moyens magnétiques ;
- des moyens pour mesurer un signal représentatif d'une force, en traction ou en compression, appliquée à un capteur directement à l'aide desdits moyens magnétiques ;
- éventuellement des moyens pour mesurer un signal représentatif de la consigne appliquée aux moyens magnétiques, par exemple, le courant et/ou la tension d'alimentation des moyens magnétiques.

De préférence, le capteur comporte au moins une partie magnétique ou ferromagnétique.

Selon une réalisation, les moyens pour générer un champ magnétique comportent un électroaimant.

De préférence, un dispositif selon l'invention comporte en outre des moyens pour inverser le sens d'application du champ magnétique long de la direction (XX'), par exemple des moyens pour :
- inverser le sens de circulation du courant dans un électroaimant, permettant la génération d'une force de traction ou de compression ; ces moyens jouent alors le rôle d'un actionneur ;
- et/ou des moyens pour couper l'application du champ magnétique le long de l'axe (XX') ; ces moyens jouent alors le rôle d'un interrupteur.

Selon un exemple de réalisation, un dispositif selon l'invention comporte en outre des moyens, par exemple de type mécanique, pour limiter la distance entre les moyens magnétiques et un capteur à une distance minimum. La chaîne de mesure peut ainsi être sécurisée.

Le dispositif selon l'invention peut comporter également des moyens pour ajuster et maintenir et/ou mesurer une position relative, selon l'axe (XX'), entre un capteur à tester et les moyens magnétiques, peuvent comporter au moins un moteur, par exemple un moteur pas à pas.

Le dispositif selon l'invention peut comporter également des moteurs, par exemple des moteurs pas à pas, selon au moins 2 axes, par exemples les axes (YY') et (ZZ'), pour centrer le capteur à caractériser et les moyens magnétiques.

Selon une réalisation, le support mobile est piloté par un système 3 axes commandé par 3 moteurs.

Un dispositif selon l'invention peut en outre comporter :
- des moyens pour centrer et/ou maintenir et/ou mesurer une position relative selon les axes (YY') et (ZZ') entre le capteur à caractériser et les moyens magnétiques ;
- et/ou des moyens de mesure et/ou de numérisation et/ou de traitement d'un signal prélevé aux bornes d'un capteur testé ou caractérisé à l'aide du dispositif selon l'invention, par exemple des moyens pour réaliser une transformée de Fourier dudit signal ;
- et/ou des moyens de mesure et/ou de numérisation et/ou de traitement d'un signal prélevé aux bornes de la consigne en tension ou en courant des moyens magnétiques générant la sollicitation à l'aide du dispositif selon l'invention, par exemple du système d'alimentation des moyens magnétiques ;
- et/ou des moyens pour mémoriser des données de réponse et/ou d'étalonnage et/ou d'hystérésis d'un capteur.

L'invention concerne également un procédé de test et/ou d'étalonnage et/ou de caractérisation d'un capteur, par exemple un capteur de force, par exemple mettant en oeuvre un dispositif tel que décrit ci-dessus et dans la suite de la présente demande.

Un tel procédé de test et/ou d'étalonnage et/ou de caractérisation d'un capteur peut comporter les étapes suivantes :
- le maintien dudit capteur de manière fixe par rapport à des moyens de génération d'un champ magnétique ;
- éventuellement le positionnement (ou centrage) dudit capteur avec les moyens magnétiques ;
- la génération d'un champ magnétique (B) permettant l'application d'une contrainte, par exemple d'une traction ou d'une compression sur le capteur, par interaction directe entre ce champ et le capteur ;
- la mesure et/ou l'enregistrement et/ou la numérisation de la réponse du capteur à cette contrainte, par exemple en traction ou compression ;
- éventuellement la mesure et/ou l'enregistrement et/ou la numérisation du pilotage des moyens magnétiques.

Un procédé selon l'invention peut comporter en outre une étape de montage d'un accessoire, par exemple un anneau, sur le capteur.

Un tel procédé peut comporter une étape préalable de montage d'une pièce magnétique sur l'accessoire.

Dans un procédé selon l'invention, on peut appliquer alternativement une force ou une contrainte de traction puis de compression (ou inversement) au capteur en inversant le champ magnétique, par exemple en inversant le sens de circulation d'un courant dans un électroaimant qui génère ledit champ magnétique.

Si le corps du capteur est amagnétique, le procédé peut comporter une étape préalable de montage d'une pièce magnétique sur ou dans le capteur, par exemple, une vis. A noter que la pièce magnétique ajoutée est de référence choisie compatible avec l'étendue de mesure du capteur.

Un procédé selon l'invention peut comporter en outre la modification ou l'ajustement de l'écart entre des moyens pour générer un champ magnétique et ledit capteur. Il est ainsi possible de réaliser des mesures pour différentes distances entre le capteur et les moyens pour générer via le champ magnétique une force spécifique.

Un procédé selon l'invention peut comporter l'application au capteur :
- d'une contrainte en traction puis d'une contrainte en compression ;
- ou d'une contrainte en traction ou en compression, puis d'une absence de contrainte (le capteur étant alors au repos).

La contrainte en traction ou en compression peut être appliquée selon un 1^{er} axe de sensibilité du capteur, de préférence en limitant les efforts transverses vus par le capteur. Si le capteur comporte au moins un 2^{ème} axe de sensibilité, le procédé peut comporter en outre une étape de modification de l'orientation du capteur, et l'application d'une traction ou d'une compression selon au moins ce 2^{ème} axe de sensibilité du capteur.

Un procédé selon l'invention peut être appliqué par exemple à un capteur pouvant réaliser une mesure de poids ou de masse en dynamique, par exemple un capteur de force de type piezorésistif, ou piezoélectrique ou capacitif, monoaxial ou tri-axial ou un capteur comportant une balance.

Ce procédé selon l'invention peut être étendu par exemple à un capteur pouvant réaliser une mesure de masse en dynamique, par exemple une balance.

Par exemple, un capteur auquel l'invention peut être appliquée peut comporter une ou plusieurs face(s), le champ magnétique étant appliqué selon une direction perpendiculaire(s) à cette ou ces face(s).

Un procédé selon l'invention peut comporter en outre une étape de mémorisation de données de la variation temporelle de la réponse du capteur d'un état initial, lorsque soumis à ladite contrainte, par exemple ladite traction ou compression, en fonction d'une position du capteur par rapport à des moyens qui génèrent ledit champ magnétique (B), à son passage à un état final, qui peut être le capteur au repos ou le capteur selon une contrainte différente de son état initial, par exemple traction ou compression, en fonction d'une nouvelle position du capteur par rapport à des moyens qui génèrent ledit champ magnétique (B). De telles données sont par exemple des données de réponse et/ou d'étalonnage et/ou de qualification d'hystérésis du capteur.

Un dispositif selon l'invention ou un procédé selon l'invention permet de tester et/ou de caractériser et/ou d'étalonner un capteur de force en régime dynamique (on mesure la réponse du capteur en fonction du temps) en appliquant une ou plusieurs contraintes successives, par exemple en générant un ou plusieurs échelons de force (par exemple avec retour à son état initial au repos ou en contrainte), dont l'amplitude est maîtrisée par application d'un champ magnétique directement sur le capteur et sans contact avec celui-ci.

Cette sollicitation, sans contact, permet notamment de remonter à la fonction de transfert du capteur testé, et/ou de la chaîne de mesure dans son ensemble, par exemple avec des moyens d'acquisition et/ou de traitement du signal, dans l'environnement de travail du capteur, en prenant en compte les éventuels couplages mécaniques, par exemple, lorsqu'un support accessoire doit être monté sur le capteur pour les besoins de l'expérimentation.

La phase statique d'un palier généré par application d'un champ magnétique constant dans le temps permet également d'étalonner le capteur de force en régime statique : pour l'application d'un champ donné, par exemple en fonction de la distance entre les moyens magnétiques et le capteur, on peut mesurer la sensibilité du capteur.

Un dispositif ou un procédé selon l'invention permet de générer un échelon ou une contrainte avec un champ magnétique, mais également de pouvoir tester un capteur en traction et/ou en compression (par exemple d'abord en traction, puis en compression, ou inversement) en adaptant l'orientation du champ magnétique, par exemple la polarité de l'électroaimant : aucune modification ou interférence n'est nécessaire avec le montage expérimental. De plus, cet étalonnage peut être réalisé sur un lieu d'expérimentation, et pas seulement en laboratoire.

Un dispositif ou un procédé selon l'invention permet de solliciter selon une direction un capteur à une composante (1 axe de sensibilité) ou plusieurs, par exemple 3, composantes (par exemple 3 axes de sensibilité) moyennant modification de l'orientation du capteur pour la caractérisation et/ou l'étalonnage de chaque axe.

Dans un procédé ou un dispositif selon l'invention, le capteur, en traction ou en compression, peut-être :
- soumis à une contrainte ou une force dans une large gamme, par exemple comprise entre 1/10 de Newton et 1 Newton ou plus de 1 N, par exemple jusqu'à 5 N (en fonction des moyens pour générer un champ magnétique, le procédé ou le dispositif selon l'invention peut être utilisé dans des gammes plus élevées; si on change l'électroaimant, on peut vérifier que celui-ci génère un champ suffisamment fort, et éventuellement que, lorsqu'on coupe son alimentation, il relâche le capteur dans un temps de préférence plus court que le temps de réponse du capteur, afin d'exciter au mieux dans la bande passante du capteur, de préférence dans toute cette bande passante ;
- et/ou sollicité sur l'étendue de mesure du capteur, mais également en chargement - déchargement, sans intervention de l'opérateur d'un point de vue mécanique.

L'invention permet par exemple de caractériser, voire d'étalonner, par exemple un capteur de force comme un capteur de mesure de masse en dynamique, par exemple pour évaluer la perte de masse d'un matériau soumis à un flux de chaleur.

L'invention est peu encombrante et peut être emmenée par les utilisateurs sur les sites expérimentaux. Elle permet de limiter les échanges thermiques, par exemple grâce à un capotage intégral. Elle permet également d'isoler la chaîne de mesure d'éventuels parasites liés à des vibrations, par exemple grâce à son support, comportant par exemple des patins, anti-vibrations.

### BRÈVE DESCRIPTION DES FIGURES

Les figures 1A et 1B représentent 2 exemples de réalisation d'un dispositif selon 2 modes de réalisation de l'invention ;
La figure 2A représente un dispositif selon une réalisation de l'invention, équipé de sa chaîne de mesure ;
La figure 2B représente un autre aspect de la chaîne de mesure pour un dispositif selon une réalisation de l'invention ;
La figure 3A représente d'une part la consigne appliquée à l'électroaimant et la réponse oscillatoire du système à caractériser ;
La figure 3B représente une fonction de transfert d'une chaîne de mesure ;
[Fig.4A], [Fig.4B], [Fig.4C] et (Fig.4D] représentent la comparaison de signaux temporels (figures 4 A et 4C) et leur réponse fréquentielle (figures 4B et 4D) pour une sollicitation de type compression et traction.
Les figures 5A - 5B représentent des signaux temporels obtenus pour sollicitation en compression (figure 5A) ou en traction (figure 5B).
La figure 6 représente l'évolution de la variation de masse vue par un capteur (en fonction du déplacement des moteurs) sur une partie de la pleine échelle du capteur (2 g > 7 g).
La figure 7 illustre la répétabilité d'une mesure.
La figure 8A représente un exemple de capteur auquel l'invention peut être appliquée.
Les figures 8B-8D représentent diverses étapes de préparation d'un capteur selon l'invention.
La figure 8E représente un ensemble de différents éléments d'un dispositif pour mettre en oeuvre l'invention.
Les figures 9A - 9B représentent des étapes d'un procédé selon l'invention, mis en oeuvre par un utilisateur (figure 9A) ou par logiciel (figure 9B).

### EXPOSÉ DÉTAILLÉ DE l'INVENTION

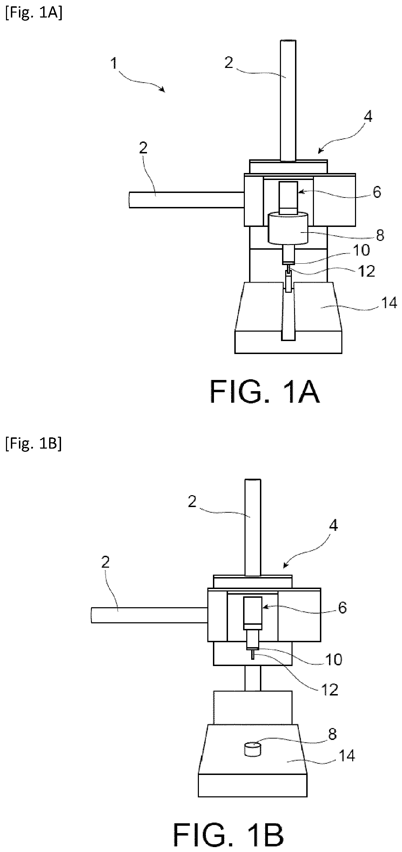

La Figure 1A représente un 1^{er} exemple de réalisation d'un dispositif 1 selon l'invention. Il comporte au moins un moteur 2 ou un ensemble de moteurs 2 (par exemple : des moteurs pas-à-pas) et un système ou platine, de préférence tri-axe, 4 qui porte une potence 6 sur laquelle sont montés des moyens 8 pour générer un champ magnétique, par exemple un électroaimant.

En regard de ces moyens 8 est disposé une platine ou banc ou support de mesure 14, qui permet de positionner et de maintenir un capteur 12 de force (représenté positionné sur le support, mais ce capteur peut être enlevé du dispositif selon l'invention). Eventuellement, si ce capteur est amagnétique, il est muni d'une partie magnétique (ou ferroélectrique), par exemple une vis magnétique 10. Un exemple d'un tel capteur est un capteur piezorésistif, comportant notamment un pont de Wheastone aux bornes duquel un signal va pouvoir être prélevé, lequel est représentatif de la contrainte ou de la force appliquée au capteur, qu'on assimile à une masse ou à une force, à l'aide du champ magnétique généré par les moyens 8.

On peut ainsi générer une contrainte appliquée directement au capteur 12, sans contact, par l'utilisation d'un champ magnétique engendré par les moyens 8 selon un axe XX' ; de préférence, on aligne un axe de sensibilité du capteur 12 selon cet axe XX', de sorte qu'une force est appliquée à celui-ci et selon cet axe de sensibilité. Cette force résulte de l'interaction directe du champ dirigé selon cet axe XX' avec le capteur ou sa partie magnétique ou ferromagnétique. Par exemple, un échelon de force permettant l'étalonnage du capteur est généré à partir du changement d'état des moyens magnétiques. On peut mesurer, aux bornes du capteur, la réponse de celui-ci en fonction de la contrainte qui lui est appliquée. On peut donc procéder à un étalonnage du capteur. Si le capteur comporte plusieurs axes de sensibilité, on peut faire plusieurs mesures, éventuellement plusieurs étalonnages, selon ces différents axes, en modifiant la position ou l'orientation de celui-ci pour passer de l'alignement, selon l'axe XX', d'un axe de sensibilité du capteur à un autre.

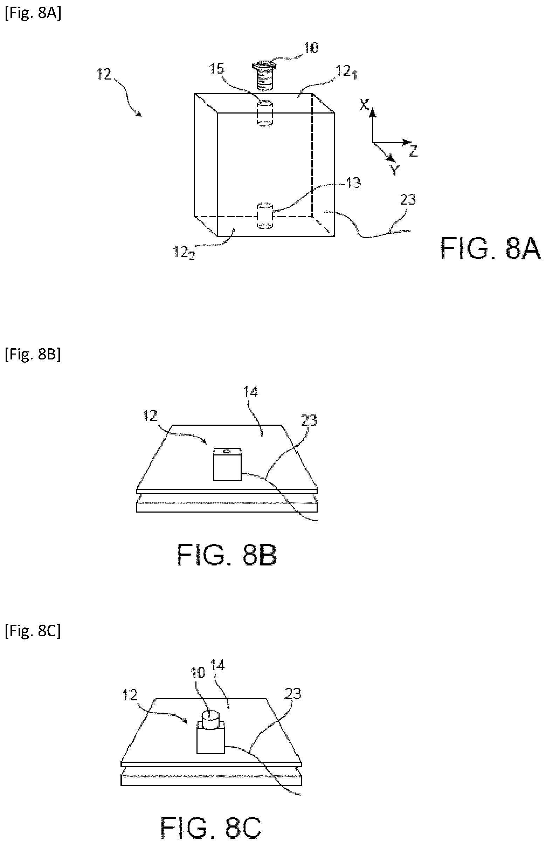

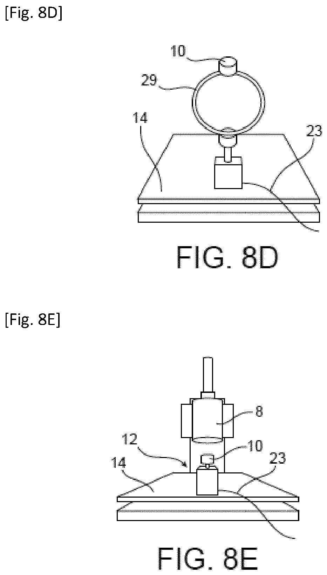

En général, l'axe XX' sera perpendiculaire à une surface du support 14 et/ou à une surface du capteur (voir explications ci-dessous en lien avec les [Fig.8A], [Fig.8B], [Fig.8C], [Fig.8D] et [Fig.8E]) qui est utilisée pour appliquer une contrainte au capteur, par exemple en traction ou en compression.

En variante, illustrée en figure 1B, le capteur 12 du dispositif 1 est monté sur la potence 6 et les moyens 8 pour générer un champ magnétique sont montés sur une platine ou banc ou support de mesure 14 ou fait partie de celui-ci. Le reste du dispositif, et son fonctionnement, sont les mêmes que ceux indiqués ci-dessus.

Dans les 2 cas, les moyens 2, 4, 6 permettent de réaliser un positionnement précis du moyen 8 pour générer un champ magnétique par rapport au capteur 12. L'amplitude de la force ou de l'échelon de force appliquée au capteur peut être ajustée en fonction de la distance entre le moyen 8 pour générer un champ magnétique et le capteur. Cette distance peut être connue avec une grande précision, elle peut être mesurée et mémorisée dans des moyens de mémorisation en vue d'être associé à un signal de réponse du capteur pour cette même distance ; en faisant varier cette distance, on connaît l'évolution de la réponse du capteur à une contrainte qui varie ainsi en intensité. La contrainte appliquée au capteur à l'aide d'un dispositif selon l'invention est donc dirigée de manière précise selon l'axe XX'.

Au contraire, dans la technique de la lame coupante :
- l'application d'une force perpendiculaire au fil, par l'action de la lame, peut générer une force de biais qui modifie également l'application de la force au niveau du capteur sous contrainte ;
- lors de la coupure du fil par une lame, une certaine quantité de fil reste accrochée au capteur et est mise en mouvement, ce qui fausse l'état final (la position d'équilibre). En revanche, dans le cadre de la présente invention, un capteur qui interagit directement avec un élément magnétique 8 non mobile permet de mieux caractériser l'état final du capteur au repos complet. Cela est un critère d'autant plus important que la gamme de mesure du capteur peut être faible (sur un capteur ayant une étendue de mesure de 10 g par exemple, une longueur de fil ayant une masse de 1 g peut rester accrochée au capteur et se comporter temporairement comme un ressort, ce qui n'est pas négligeable). Par ailleurs, dans la technique de la lame coupante, la quantité de fil restant accrochée peut avoir un mouvement propre qui perturbe la réponse oscillatoire du système complet.

Des moyens formant une butée mécanique peuvent être mis en oeuvre, afin d'éviter un éventuel endommagement du capteur étalonné, qui pourrait venir en contact avec les moyens 8 pour générer un champ magnétique : on peut, par exemple, positionner une barre entre la surface du support 14 et le moyens 8, de sorte que celui-ci soit maintenu à une distance minimum du capteur et ne vienne pas détériorer ce dernier.

En complément, ou en variante, le(s) moteur(s) 2 peu(ven)t être contrôlé(s) de manière à ce que les moyens 8 ne puissent pas s'approcher en dessous d'une certaine distance par rapport au capteur 12.

En particulier, on peut mettre en oeuvre un ou des moteurs pas à pas 2, qui permet(tent) d'assurer un centrage précis des moyens 8 par rapport au capteur 12; cette précision est bien supérieure à celle obtenue dans le cas d'une technique telle que celle du couteau. Avec un tel système, un étalonnage dynamique in-situ est possible, par exemple sur un site d'essai expérimental. Un tel exemple est celui d'un moyen expérimental permettant d'appliquer une contrainte thermique brève et de forte intensité : après étalonnage in *situ* (donc près du dispositif expérimental ) par l'une des techniques décrites dans la présente demande, un objet, par exemple un disque porté par un anneau, peut-être positionné sur le capteur pour être soumis à un apport de chaleur important par le dispositif expérimental; la matière constitutive de l'objet (disque) est dégradée et le capteur 12 suit l'évolution de ce processus.

Si le capteur considéré présente une structure amagnétique on peut monter au préalable du test et/ou de l'étalonnage /ou de la caractérisation, une pièce magnétique 10, de préférence la moins invasive possible (en masse notamment), par exemple une vis magnétique.

L'invention permet également de solliciter un capteur alternativement en traction puis en compression (ou l'inverse) sans modification du montage, sans être invasif ni dépendant d'un opérateur, simplement par inversion de l'orientation du champ magnétique, par exemple par inversion de la polarité des moyens 8 pour générer un champ magnétique ; au contraire, les techniques de l'art antérieur nécessitent une action de l'opérateur sur le système, et notamment sur le capteur, entre les étalonnages dynamiques en traction et en compression.

Ainsi, par rapport aux techniques connues, et notamment celle du « cut-wire », Il est possible de réaliser un ou des cycles complets de tests en contrainte (traction ou compression) sans aucune intervention d'un opérateur. On peut donc effectuer :
- un passage d'un 1^{er} état de contrainte du capteur à un 2^{e} état de contrainte (en inversant le sens du champ magnétique généré par exemple par un électroaimant) ou à un état d'équilibre au repos (en coupant le champ magnétique généré par les moyens magnétiques, par exemple l'électroaimant) ;
- puis éventuellement un passage dudit 2^{e} état de contrainte ou de l'état au repos au 1^{er} état de contrainte, en générant un échelon de force par mise en fonctionnement des moyens magnétiques, par exemple de l'électroaimant.

Ces 2 étapes peuvent être réalisées dans l'ordre inverse.

L'invention est de mise en oeuvre plus commode que la méthode du « cut-wire»: l'opérateur ne perd pas de temps à accrocher le fil souvent fin, étape qui, d'ailleurs, pose des problèmes de répétabilité puisque les noeuds ne sont jamais faits exactement à l'identique. De plus, le principe de cette méthode du « cut-wire » est de tendre le capteur à l'aide d'un fil tendu au bout duquel une masse est positionnée ; le capteur est alors soumis à une force statique. La coupure du fil très rapide libère la masse et génère ainsi un échelon de force au niveau du capteur qui revient à sa position de repos. Il est parfois difficile de couper de façon très nette et très brève le fil tendu (la lame de l'élément coupant pouvant être plus ou moins émoussée), ce qui rend la montée d'échelon moins abrupte (on n'est d'ailleurs jamais certain que la coupe soit instantanée) qu'une coupure d'alimentation au niveau d'un électroaimant 8. Ainsi, le temps d'équilibrage du capteur est plus rapide et plus précis par un dispositif ou un procédé selon l'invention. L'invention peut fonctionner au moins dans la gamme de 0.1 N à 1 N (10 g à 100 g) mais peut être adaptée, moyennant le choix d'un moyen magnétique, par exemple, un électroaimant adéquat, à l'étendue de mesure du capteur considéré.

Un avantage de l'invention est de permettre une meilleure maîtrise de l'amplitude de l'échelon de force appliquée au capteur. On ne rencontre en effet aucun problème de planéité entre la surface du capteur et celle de l'électroaimant. Un dispositif ou un procédé selon l'invention n'implique aucun frottement, aucune transmission d'onde de contraintes, tout en éliminant les contraintes physiques supplémentaires qui sont générées lors de la coupure du fil (« overshoots » en terminologie anglo-saxonne) et les oscillations de ce même fil avant d'atteindre la position d'équilibre du capteur.

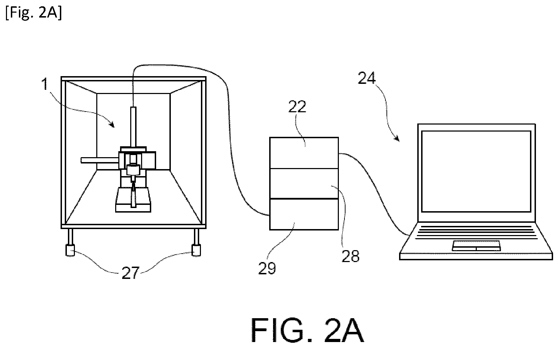

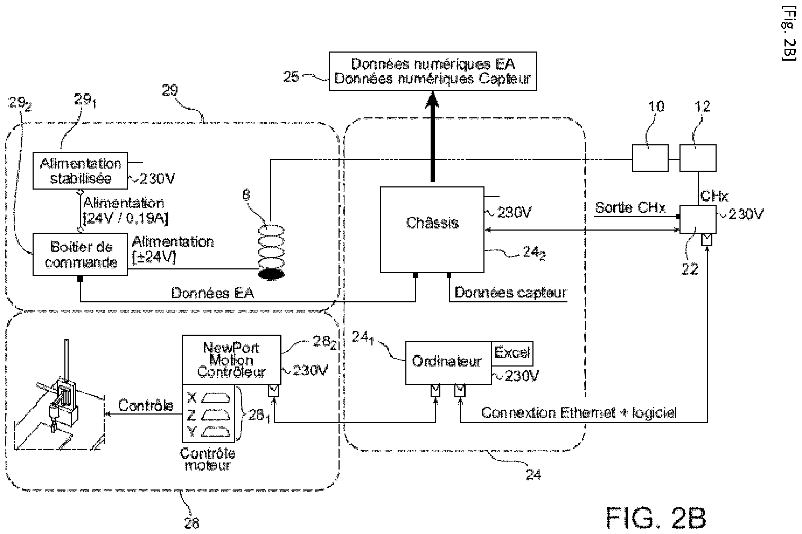

De plus, l'invention est plus facile de mise en oeuvre que la méthode du « cut-wire » sur une série de mesures : en effet, contrairement à la méthode du »cut-wire », qui requiert une opération d'installation et d'accrochage minutieux d'un fil à une masse qui sera différentes en fonction des paliers de force demandés pour couvrir la totalité de l'étendue de mesure du capteur, il est possible de réaliser des mesures de répétabilité et de reproductibilité sans intervenir sur le système entre les mesures, et ce, pour toute la gamme de mesure du capteur. Par exemple, il suffit de modifier progressivement la distance entre l'électroaimant et le capteur et de renouveler la ou les mesure(s) pour chacune des distances sélectionnées. Ceci peut être fait grâce au(x) moteur(s) 2 et aux moyens 4, 6, lesquels peuvent être pilotés par divers moyens comme expliqué ci-dessous en lien avec les figures 2A et 2B.

La figure 2A représente un dispositif selon une réalisation de l'invention, équipé de sa chaîne de mesure. Le dispositif 1 est relié à des moyens 22 d'alimentation et d'amplification dédiés au capteur testé, à des moyens 28 pour le pilotage des moteurs 2 et à des moyens 29 pour le pilotage de l'électro aimant 8. Le signal généré par le capteur peut être numérisé et traité par des moyens de traitement 24, par exemple sous forme logicielle dans un processeur ou un ordinateur ou un micro-ordinateur programmé à cet effet. Par exemple, le signal temporel mesuré peut subir un traitement par transformée de Fourier pour identifier la ou les fréquence(s) caractéristique(s) du capteur.

L'ensemble du dispositif, comportant le support 12 et l'électroaimant 8 peut être monté sur des pieds 27 comportant des moyens d'amortissement, par exemple en caoutchouc, pour neutraliser toute vibration extérieure.

La figure 2B permet de visualiser les différentes relations et/ou câblages dans un montage tel que celui de la figure 2A.

Les moyens 28 pour le pilotage du/des moteur(s) sont contrôlés par l'ordinateur 24. Ces moyens peuvent comporter un contrôleur 28₂ (relié à l'ordinateur 24 par une connexion Ethernet) et des moyens spécifiques 28₁ de contrôle du moteur le long de chacun des axes X, Y, Z.

Les moyens 29 pour le pilotage de l'électro aimant 8 comportent une alimentation stabilisée 29₁ et un boîtier de commande 29₂ de l'électro aimant. Ce dernier produit le champ magnétique qui agit sur le matériau magnétique (ou sur la vis magnétique 10). Les moyens 24 comportent l'ordinateur 24₁ proprement dit et un châssis 24₂ d'acquisition de données. Les données relatives à l'électro aimant et les données provenant du capteur 12 sont envoyées vers le châssis 24₂ d'acquisition de données, lequel produit des données numériques correspondantes 25.

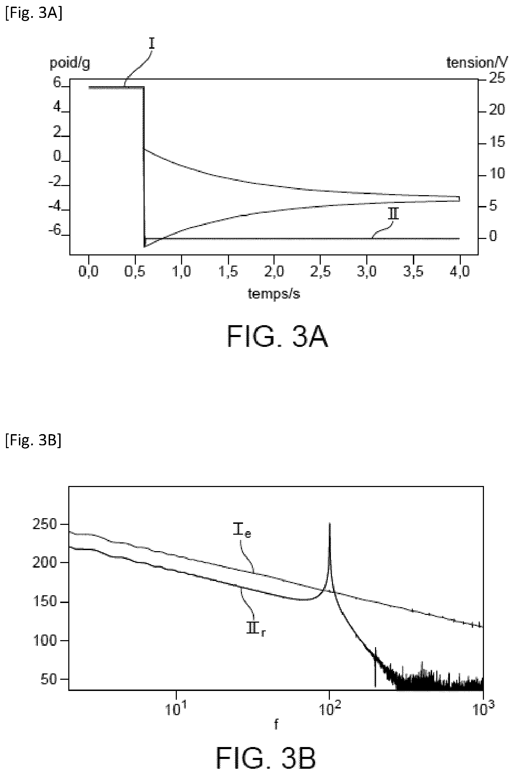

La figure 3A représente d'une part la consigne appliquée à l'électroaimant 8 (avec son changement d'état) et la réponse oscillatoire du système à caractériser. La consigne ou l'état de l'électroaimant 8 est caractérisé(e) par les niveaux I et Il représentés sur cette figure : on applique, par passage du niveau I au niveau II, un échelon de contraintes au capteur 12 que l'on veut étalonner ou qualifier. La réponse oscillatoire temporelle de ce dernier est représentée sur cette même figure. La figure 3B représente cette même réponse en termes fréquentiels (courbe IIᵣ, la courbe Iₑ représentant la fréquence d'excitation), il s'agit donc de la fonction de transfert du système.

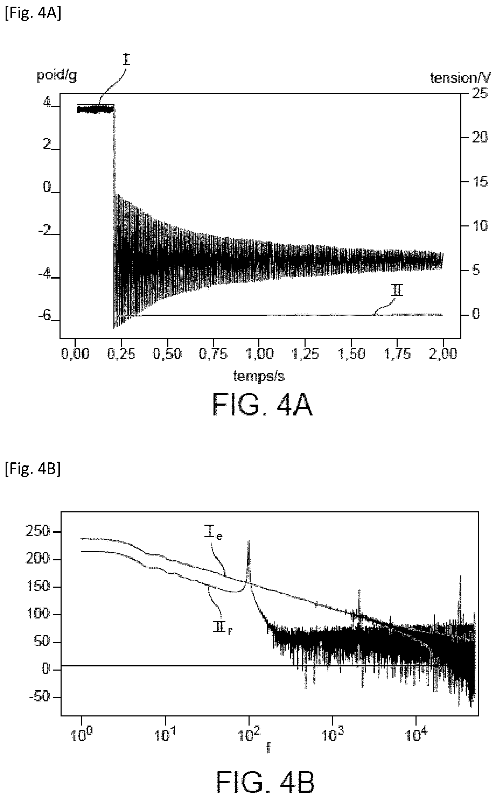

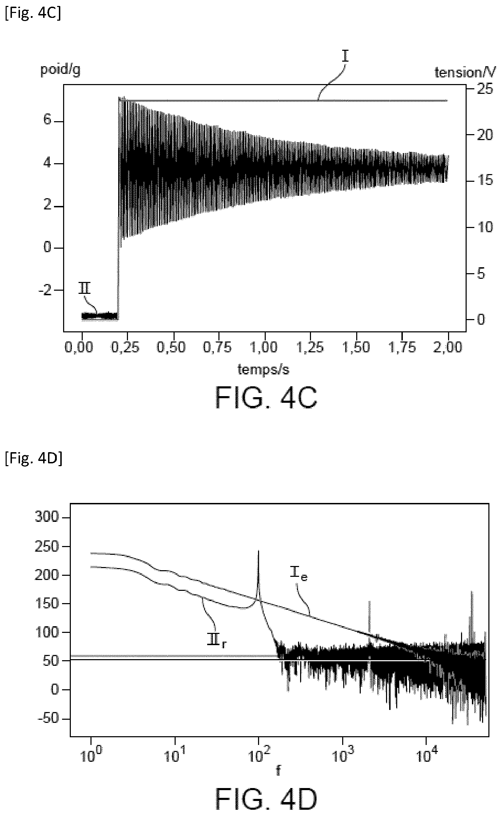

Les figures 4A - 4D représentent la comparaison de signaux temporels (figures 4 A et 4C) et fréquentiels (figures 4B et 4D, sur lesquelles la courbe IIᵣ, représente la réponse du capteur, la courbe Iₑ représentant la fréquence d'excitation) pour une sollicitation de type compression :
a) figures 4A - 4B : on applique d'abord une charge de 4 g puis un déchargement à -2.5 g (qui correspond, dans cet exemple, à l'état final « sans sollicitation », dû à la masse de la vis aimantée ; même commentaire pour les autres figures 4B-4D) ; on reconnaît, en figure 4A, les 2 états I et II de l'échelon appliqué par l'électroaimant ;
b) figures 4C - 4D : l'état initial « sans sollicitation » est à -2.5 g puis on réalise un chargement à 4 g (état final). Dans ce cas, l'effort est inversé par rapport aux figures précédentes, puisqu'on passe de l'état Il à l'état I.

La consigne d'alimentation de l'électroaimant est ici de 24 V : l'état « à vide », c'est-à-dire ne générant aucune contrainte sur le capteur (état II) étant pour une alimentation de 0 V, l'état de mise sous contrainte (état I) pour une alimentation de 24 V.

Ces figures 4A - 4D montrent que l'on peut tester la réponse du capteur en chargement ou en déchargement, par exemple en passant d'un état initial à un état final ou d'un état final à un état initial juste en changeant la polarité de l'électroaimant. Il n'y a aucune autre modification du dispositif à effectuer, ce qui garantit des conditions de mesure identiques et constantes d'une mesure à l'autre.

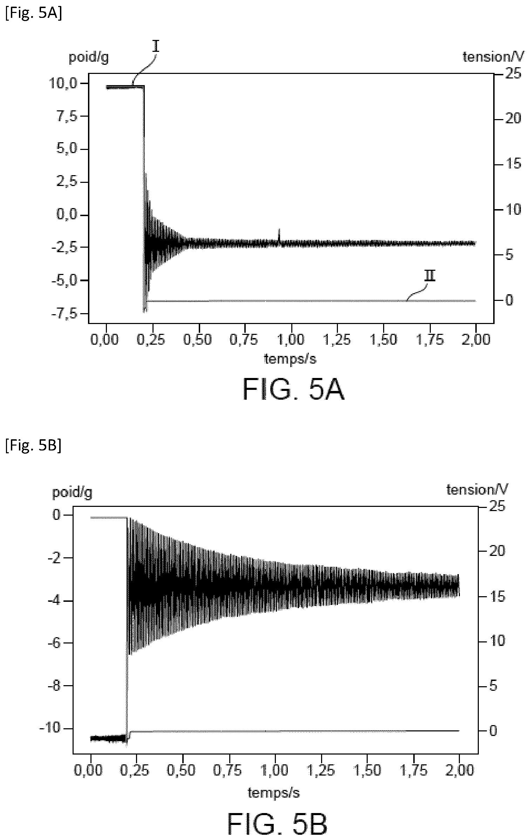

Les figures 5A - 5B représentent des signaux temporels obtenus pour une sollicitation :
- en compression (figure 5A) à 10 g, suivie d'un déchargement à -2.5 g (état « à vide ») ;
- ou en traction (figure 5B) à -10 g, suivi d'un déchargement à -2.5 g (état à vide).

Là encore, on reconnaît, en figure 5A, les 2 états I et II de l'échelon appliqué par l'électroaimant 8.

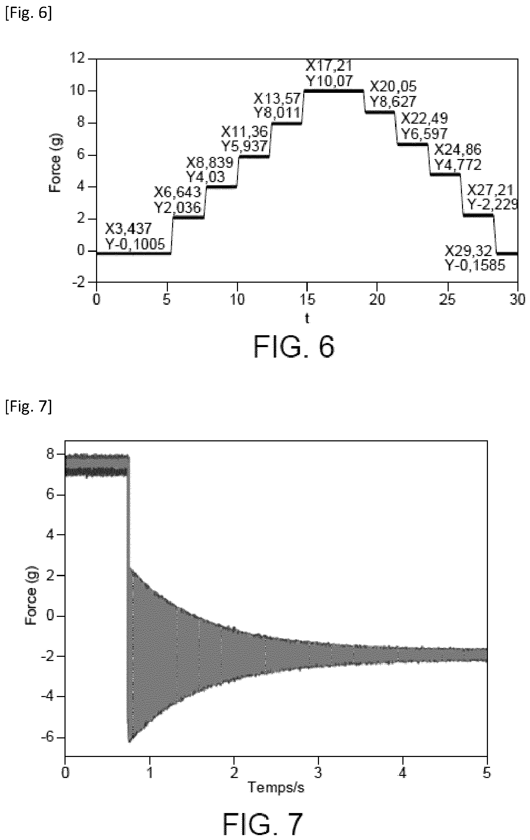

La figure 6 représente l'évolution de la variation de masse (axe vertical, en g) vu par le capteur 12, en fonction du déplacement de l'électroaimant (selon 2 axes X et Y perpendiculaires entre eux), sur une partie de la pleine échelle du capteur (dans cet exemple : de 2 g à 7 g). Cette figure montre bien la présence d'une hystérésis du capteur. L'invention permet donc, en mesurant la réponse du capteur en compression, puis en traction, ou l'inverse, d'identifier une telle hystérésis. Elle permet donc d'identifier des données de la courbe d'hystérésis du capteur.

La figure 7 illustre la répétabilité d'une mesure selon l'invention. 50 essais ont été réalisés sur un capteur de 10 g d'étendue de mesure. La durée de chaque test est de 5 secondes, et l'échantillonnage est de 1 kHz (nombre de points : 5000).

La valeur maximale (respectivement : minimale) de l'écart type est de 0,14 (respectivement : 0,0085), et sa moyenne est de 0,0233.

La répétabilité constatée pour une même mesure selon l'invention est donc très bonne.

La figure 8A représente un exemple de capteur 12 auquel un dispositif selon l'invention ou un procédé selon l'invention invention peut être appliqué. Il comporte un boîtier, par exemple de forme sensiblement parallélépipédique, qui contient un élément piezorésistif associé à un pont de Wheastone. L'invention peut être utilisée sur des capteurs permettant des mesures de masse ou de poids. Elle peut être utilisée sur des capteurs de type capacitif, ou piezorésistif, ou piézoélectrique ou tels qu'une balance. La face supérieure 12₁ et/ou la face inférieure 12₂ peu(ven)t être utilisée(s) pour soumettre le capteur à une contrainte en traction ou en compression, un axe de sensibilité du capteur étant orienté suivant l'axe X sensiblement perpendiculaire à chacune de ces faces 12₁, 12₂. Le capteur peut comporter un ou 2 autre(s) axe(s) de sensibilité, par exemple selon l'axe Y et/ou Z, perpendiculaires entre eux et à l'axe X, auquel cas l'une ou l'autre des faces perpendiculaires à l'un au moins de ces axes Y, Z peut être utilisée pour effectuer des mesures, en traction ou en compression, selon l'axe choisi. Une ou plusieurs des faces utilisées peuvent être munies d'un trou 13, 15, pour pouvoir appliquer la contrainte à mesurer. Ce sont par exemple des trous taraudés. Le trou 13 peut être utilisé notamment pour fixer le capteur 12 sur la platine 14 (figure 1A) ou sur la potence 6 (figure 1B). Le trou 15 peut être utilisé pour introduire un élément, par exemple une vis 10, en matériau magnétique ou ferromagnétique, si l'ensemble du capteur est amagnétique et en vue de mettre en oeuvre un procédé selon l'invention.

Un ou plusieurs fil(s) 23 (voir figures 8B-8E) permet(tent) de prélever des signaux représentatifs des contraintes appliquées au capteur 12. Un capotage (non représenté) permet de protéger le banc objet de l'invention des perturbations environnementales (courant d'air, variations de température) lors des mesures effectuées.

Les figures 8B - 8D représentent :
- le support 14 et le capteur 12 (figure 8B);
- un exemple de fixation d'une vis magnétique 10 (figures 8B et 8C), avec, dans le cas de la figure 8C, l'ajout d'un accessoire (ici un anneau) 31.

Le capteur 12 est d'abord vissé sur le support métallique 14 (figure 8B), puis on ajoute la vis magnétique 10 (figure 8C) ou l'ensemble anneau 31 et vis magnétique 10 (figure 8D).

La figure 8E présente une vue de l'alignement entre les différents éléments du dispositif : le support 14, le capteur 12 ici avec la vis magnétique (élément 10), et l'électroaimant 8.

Dans un exemple de mise en oeuvre d'un procédé selon l'invention, lequel procédé peut mettre en oeuvre un dispositif tel que décrit dans la présente demande, le champ magnétique B est appliqué selon l'axe X, dans un sens ou dans l'autre, et interagit directement soit avec l'ensemble du capteur 12, soit avec l'élément 10, en vue de soumettre ce capteur à la contrainte souhaitée, en traction ou en compression. La réponse du capteur peut être par exemple mesurée en fonction de la distance entre les moyens 8 de génération du champ magnétique et le capteur.

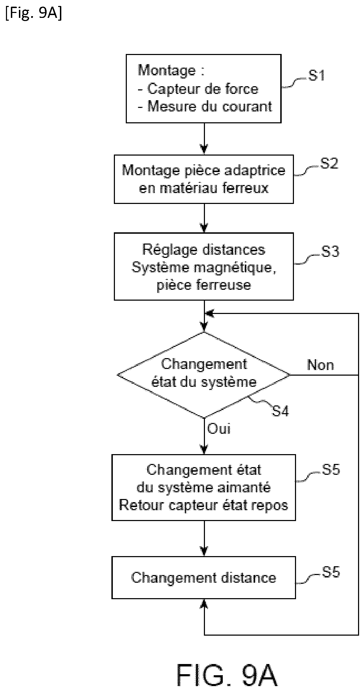

La figure 9A représente des étapes de mise en oeuvre d'un exemple de procédé selon l'invention, par exemple de caractérisation de la fonction de transfert.

Dans une 1^{re} étape (S1) on monte le capteur de force 12, par exemple dans un montage selon l'une des figures 1A ou 1B ; on peut régler la mesure de consigne pour le fonctionnement de l'électroaimant (ici, le courant appliqué à l'électroaimant 8).

Dans une 2^{e} étape (S2), on peut éventuellement monter une pièce d'adaptation 10 en matériau ferreux (par exemple dans le cas où le capteur 12 est amagnétique), ou une pièce accessoire 29 sur le capteur 12. Si cette pièce accessoire 29 est amagnétique, il faudra monter une pièce d'adaptation 10 en matériau ferreux.

La distance entre le système magnétique et le capteur 12 peut être précisément réglée et/ou mesurée, par exemple à l'aide d'un moteur pas à pas (étape S3). Le centrage entre le système magnétique 8 et le capteur peut être assuré dans un plan (YZ) par une platine pilotée par deux moteurs pas à pas.

Initialement, le système, comportant essentiellement le capteur 12, est dans un certain état, lié à l'application, ou pas, d'un champ magnétique selon l'axe XX'. Lorsque l'on décide de changer l'état du système (étape S4), celui-ci passe, par exemple, d'un état contraint (en traction ou en compression) à son état de repos (étape S5) : un tel passage, d'un 1^{er} état à un 2^{e} état, est illustré en figures 3A, 4A, 4C ou 5A déjà commentées ci-dessus. Une mesure de la réponse du système, par exemple selon l'une de ces figures 3A, 4A, 4C ou 5A, peut alors être réalisée. Le signal ainsi mesuré peut être soumis à un ou plusieurs traitement(s), notamment une transformée de Fourier en vue d'identifier le spectre de sa réponse et, par exemple, d'identifier une ou plusieurs fréquence(s) de résonance.

Il est possible ensuite de modifier la distance entre l'électroaimant et le capteur 12 (étape S6) puis de retourner par exemple au réglage de l'étape S3.

Quel que soit le mode de réalisation mis en oeuvre, les données de réponse du capteur peuvent être mémorisées, par exemple en fonction de la distance entre l'électroaimant et le capteur. Éventuellement, il est possible de collecter des données de réponse du capteur en fonction de la température, ce qui peut être intéressant pour l'utilisation du dispositif dans une certaine gamme de température.

On peut ainsi mémoriser, pour un ou plusieurs capteurs, des données de réponse et/ou des données de courbe(s) d'hystérésis.

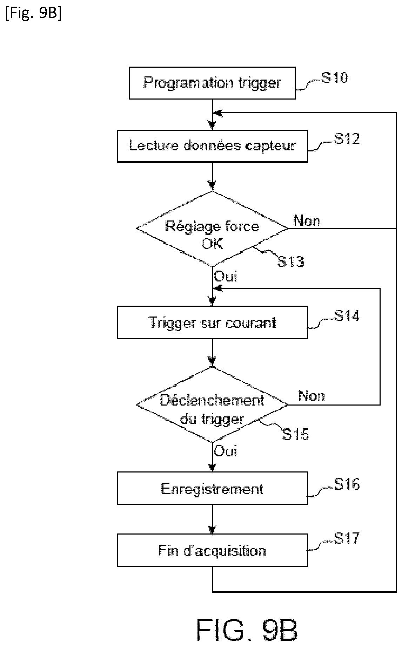

Des étapes d'un logiciel de mise en oeuvre d'un procédé selon l'invention sont illustrées en figure 9B.

Dans une 1^{re} étape (S10) le niveau de déclenchement des moyens de mesure d'un signal provenant du capteur 12 peut être programmé.

On lit ensuite (étape S12) les données du capteur).

La force appliquée peut être ensuite réglée (étape S13), par exemple en fonction du niveau de courant qui circule dans l'électroaimant, et, si ce réglage est satisfaisant, on peut déclencher ce courant (étape S14) ainsi que l'acquisition des données (étape S15). On procède ensuite à l'enregistrement de ces données (étape S16). C'est la fin de l'acquisition (étape S17).

## Revendications

1. Dispositif pour la caractérisation d'un capteur de force (12), comportant :
- des moyens (8) magnétiques pour générer un champ magnétique selon au moins un axe (XX');
- des moyens (2, 4, 6) pour ajuster puis maintenir une position relative, selon l'axe (XX'), entre un capteur (12) à tester et les moyens (8) magnétiques ;
- des moyens (22-24) pour mesurer un signal représentatif d'une force, en traction ou en compression, appliquée au capteur directement à l'aide desdits moyens magnétiques.

2. Dispositif selon la revendication 1, comportant un support fixe (14) de maintien du capteur (12) à caractériser et un support mobile (6) de maintien des moyens magnétiques (8).

3. Dispositif selon la revendication 2, le support mobile (6) étant piloté par un système 3 axes (4) commandé par 3 moteurs (2).

4. Dispositif selon l'une des revendications 1 à 3, les moyens (8) pour générer un champ magnétique comportant un électroaimant.

5. Dispositif selon l'une des revendications 1 à 4, comportant en outre des moyens (29) pour :
- au moins inverser le sens d'application du champ magnétique le long de la direction (XX') ;
- et/ou couper l'application du champ magnétique le long de l'axe (XX').

6. Dispositif selon l'une des revendications 1 à 5, comportant en outre des moyens pour limiter la distance entre les moyens magnétiques et un capteur à une distance minimum.

7. Dispositif selon l'une des revendications 1 à 6, les moyens (2, 4, 6) pour ajuster et maintenir et/ou mesurer une position relative, selon l'axe (XX'), entre un capteur de force (12) à caractériser et les moyens (8) magnétiques, comportant au moins un moteur (2), par exemple un moteur pas à pas.

8. Dispositif selon l'une des revendications 1 à 7, comportant en outre des moyens (2,4,6) pour centrer et/ou maintenir et/ou mesurer une position relative selon les axes (YY') et (ZZ') entre le capteur à caractériser (12) et les moyens (8) magnétiques.

9. Dispositif selon l'une des revendications 1 à 8, comportant en outre :
- des moyens (24) de numérisation, et/ou de traitement, par exemple par transformée de Fourier, d'un signal prélevé aux bornes d'un capteur (12) à caractériser ;
- et/ou des moyens pour numériser et/ou mémoriser des données de réponse et/ou d'étalonnage et/ou d'hystérésis d'un capteur (12) à caractériser.

10. Procédé de caractérisation d'un capteur (12), par exemple de type piezorésistif ou capacitif, ou piézoélectrique ou comportant une balance, ce procédé comportant :
- le maintien dudit capteur (12) de manière fixe par rapport à des moyens (8) de génération d'un champ magnétique ;
- la génération d'un champ magnétique (B) selon une direction (XX') permettant l'application d'une traction ou d'une compression au capteur, par interaction directe entre ce champ et le capteur, la contrainte ainsi mise en oeuvre étant par exemple comprise entre 1/10 de Newton et 1 Newton ou plus de 1 Newton;
- la mesure de la réponse du capteur (12) à cette traction ou compression.

11. Procédé selon la revendication 10, comportant en outre au moins une des étapes suivantes:
- si le capteur (12) est amagnétique, une étape préalable de montage d'une pièce magnétique (10) sur le capteur ;
- une étape préalable de montage d'un accessoire (29), par exemple un anneau, sur le capteur (12),
- une étape préalable de montage d'une pièce magnétique (10) sur l'accessoire.

12. Procédé selon l'une des revendications 10 ou 11, comportant en outre la modification ou l'ajustement de l'écart entre les moyens (8) pour générer un champ magnétique et ledit capteur (12).

13. Procédé selon l'une des revendications 10 à 12, comportant l'application au capteur (12) :
- alternativement d'une force d'une contrainte en traction puis en compression, en inversant la direction du champ magnétique ;
- ou d'une contrainte en traction ou en compression, puis d'une absence de contrainte.

14. Procédé selon l'une des revendications 10 à 13 :
- la traction ou la compression étant appliquée selon un 1^{er} axe de sensibilité du capteur (12) ;
- et/ou le capteur (12) comportant une ou plusieurs face(s) (12₁, 12₂), la direction (XX') du champ magnétique étant perpendiculaire(s) à cette ou ces face(s),
- et éventuellement, si le capteur comporte au moins un 2^{ème} axe de sensibilité:
* une étape de modification de l'orientation du capteur,
* et l'application d'une traction ou d'une compression selon ce 2^{ème} axe de sensibilité du capteur (12) ;
* la mesure de la réponse du capteur (12) à cette traction ou compression selon ce 2^{ème} axe de sensibilité.

15. Procédé selon l'une des revendications 10 à 14, comportant en outre une étape de mémorisation de données de réponse et/ou d'étalonnage et/ou d'hystérésis du capteur à ladite traction ou compression, par exemple en fonction d'une position du capteur (12) par rapport à des moyens (8) qui génèrent ledit champ magnétique (B).
